# EUROPÄISCHE PATENTSCHRIFT

(11) **EP 1 203 173 B1**
(45) Veröffentlichungstag und Bekanntmachung des Hinweises auf die Patenterteilung: **12.03.2003**
(21) Anmeldenummer: 00951446.4
(22) Anmeldetag: 26.07.2000
(51) Int. Cl.: F16H 7/12

(54) **SPANNVORRICHTUNG FÜR EINEN ZUGMITTELTRIEB**
TENSIONING DEVICE FOR A TRACTION MECHANISM DRIVE
DISPOSITIF DE TENSION POUR MECANISME D'ENTRAINEMENT DE MOYENS DE TRACTION

(30) Priorität: 17.08.1999 DE 29914381 U
(43) Veröffentlichungstag der Anmeldung: 08.05.2002
(73) Patentinhaber: INA-Schaeffler KG, 91074 Herzogenaurach (DE)
(72) Erfinder: BERTELSHOFER, Thomas, D-91320 Ebermannstadt (DE); STRASSER, Alfred, D-91074 Herzogenaurach (DE); EBNER, Thomas, D-91074 Herzogenaurach (DE); LANG, Andreas, D-91301 Forchheim (DE)
(86) Internationale Anmeldenummer: EP0007142
(87) Internationale Veröffentlichungsnummer: WO01013009

(56) Entgegenhaltungen:
- EP-A- 0 400 772
- DE-A- 3 728 158
- DE-A- 4 426 666

## Beschreibung

### Gebiet der Erfindung

Spannvorrichtungen finden Anwendung in Zugmitteltrieben, insbesondere in Riementrieben, zum Antrieb von Aggregaten einer Brennkraftmaschine. Die zur Erzielung einer Vorspannung des Zugmitteltriebes eingesetzte Spannvorrichtung umfaßt ein drehstarr, vorzugsweise an der Brennkraftmaschine befestigtes Gehäuse mit einer stirnseitigen, topfartigen Ausnehmung. Eine zentrisch in die Ausnehmung plazierte Lageraufnahme ist mit einer Längsbohrung, in die eine Achse eingesetzt ist. An einem Ende ist die Achse mit einem Schwenkarm drehfest verbunden, der seitlich des Gehäuses schwenkbar angeordnet ist und dessen freies Ende eine drehbare Spannrolle aufweist. Das weitere Ende der Achse ist mit einer Reibscheibe versehen, die unterstützt durch eine zwischen dem Schwenkarm und dem Gehäuse eingesetzte Torsionsfeder sich kraftschlüssig am Gehäuse abstützt und damit eine gedämpfte Stellbewegung des Schwenkarms ermöglicht.

### Hintergrund der Erfindung

Aus der DE-32 25 411 C2 ist eine derartige Spannvorrichtung bekannt. Die darin eingesetzte Torsionsfeder erfährt zwischen den Federanlagen am Gehäuse bzw. am Schwenkarm keinerlei Führung oder Abstützung. Schwingungen des Zugmitteltriebs, die beispielsweise von der Brennkraftmaschine ausgelöst werden mit der der Zugmitteltrieb verbunden ist, bewirken hochfrequente Stellbewegungen des Schwenkarms, die nachteilige, die Torsionsfeder zerstörende Resonanzschwingungen auslösen können, verbunden mit einem Ausfall der Spannvorrichtung.

Der DE 44 26 666 A1 ist eine Spannvorrichtung zu entnehmen,deren Torsionsfeder zwischen dem Gehäuse und dem Schwenkarm drehfixiert eingesetzt ist, und der innenseitig eine Spannbuchse zugeordnet ist. Die mit einem Längsschlitz versehene Spannbuchse ist radial vorgespannt und liegt im eingebauten Zustand kraftschlüssig an der Innenkontur der Torsionsfeder an. Dabei ist die Spannbuchse aus einem metallischen Werkstoff, insbesondere aus Stahl hergestellt und erstreckt sich über eine Teillänge der Torsionsfeder. Nachteilig führen hochfrequente, von der Torsionsfeder gedämpfte bzw. kompensierte Stellbewegungen des Schwenkarms zu einer Geräuschentwicklung. Diese entsteht in einer Übergangszone zwischen dem von der Spannbuchse abgestützten und freien Bereich, in dem sich die Federwindung in schnellen Zyklen an die Spannbuchse anlegt bzw. sich von dieser löst. Die Wirksamkeit der Spannbuchse wird von deren radialen Vorspannung bestimmt. Für den Einbau, das Zusammenpressen der Spannbuchse, ist daher ein hoher Montageaufwand erforderlich.

### Aufgabe der Erfindung

Der Erfindung liegt daher die Aufgabe zugrunde, eine Spannvorrichtung zu schaffen, die:
- einen Bruch der Torsionsfeder wirksam verhindert;
- eine zuverlässige Abstützung der Torsionsfeder sicherstellt ohne Einflußnahme auf die Funktion der Spannvorrichtung;
- eine Geräuschentwicklung unterbindet;
- die Montage vereinfacht und
- kostengünstig herstellbar ist.

### Zusammenfassung der Erfindung

Die zuvor genannte Problemstellung wird erfindungsgemäß durch die im Kennzeichnungsteil von Anspruch 1 genannten Merkmale gelöst.

Danach wird zumindest ein elastisches Einlegeteil verwendet, das in einem radial von einem Gehäuseabschnitt und der Torsionsfeder begrenzten Zwischenraum eingesetzt ist. Das Einlegeteil füllt dabei den kreisringartig gestalteten Zwischenraum über eine axiale Teillänge der Torsionsfeder aus. Durch das erfindungsgemäße Einlegeteil wird die Torsionsfeder wirksam abgestützt, so daß eine in die Spannvorrichtung eingeleitete Resonanzschwingung nicht zum Ausfall der Torsionsfeder führt. Gegenüber dem Stand der Technik, bei dem die Torsionsfeder keinerlei Abstützung erfährt, bzw. eine relativ dünnwandige Spannbuchse an deren Innenkontur anliegt, verhindert das erfindungsgemäße Einlegeteil aufgrund des ausgefüllten Zwischenraums große, die Torsionsfeder zerstörende Schwingungsamplituden. Erfindungsgemäß ist das Einlegeteil so ausgelegt bzw. dimensioniert, daß die Wirkungsweise und die Funktion der Spannvorrichtung davon unbeeinflußt ist. Dadurch verbessert sich die Zuverlässigkeit der Spannvorrichtung, da die Gefahr eines Federbruchs unterbunden ist. Zusätzlich zu der wirksamen Schwingungsdämpfung ergibt sich durch das erfindungsgemäße Einlegeteil weiterhin eine Geräuschdämpfung, da durch die Anlage der aus Stahl hergestellten Torsionsfeder an dem vorzugsweise aus Kunststoff gefertigten elastischen Einlegeteil auch im Belastungsfall der Spannvorrichtung kein Geräusch entsteht. Das kostengünstig herstellbare Einlegeteil besitzt außerdem einen Gewichtsvorteil und ermöglicht eine einfache manuelle Handhabung bzw. Montage ohne jegliches Zusatzwerkzeug.

Ausgestaltungen der Erfindung sind Gegenstand der abhängigen Ansprüche 2 bis 18, die nachfolgend erläutert werden.

Die Ausgestaltung der Erfindung sieht den Einbau des Einlegeteils in dem von der Lageraufnahme und der Torsionsfeder radial begrenzten Einbauraum vor. Alternativ dazu bietet es sich an, auch ein Einlegeteil in den Einbauraum, welcher sich zwischen der Torsionsfeder und der Gehäuse-Innenwandung einstellt anzuordnen. Die Wirksamkeit des Einlegeteils ist dabei unabhängig von der Einbaulage. Vielmehr kann diese in Abhängigkeit des vorgegebenen Einbauraums oder von den vorgegebenen Einbauverhältnissen bestimmt werden.

Alternativ schließt die Erfindung ebenfalls die Verwendung von zwei als Einlegeteil gestalteten Dämpfungselementen ein, über die sich die Torsionsfeder innenseitig und außenseitig abgestützt.

Die Auslegung des erfindungsgemäßen Einlegeteils sieht vor, dass dieses Bauteil im gesamten Arbeitsbereich der Spannvorrichtung eine Abstützung der Torsionsfeder sicherstellt. Unabhängig von der Auslenkung des Schwenkarms, der eine Radialbewegung der Windungen der Torsionsfeder auslöst, ist stets eine radiale Anlage des Einlegeteils an der Torsionsfeder gewährleistet, d. h. eine radiale Überdeckung zwischem dem Einlegeteil und der Torsionsfeder.

Für ein zwischen der Torsionsfeder und der Lageraufnahme eingesetztes Einlegeteil ist gemäß der Erfindung eine kraftschlüssige Befestigung vorgesehen. Die dazu vorgesehene maßliche Auslegung sieht vor, dass der Außendurchmesser der Lageraufnahme den Innendurchmesser des Einlegeteils übertrifft. Diese Maßnahme bewirkt eine radiale Überdeckung, die allein ausreichend ist für eine dauerfeste Lagepositionierung des Einlegeteils.

Als weiteres Auslegungskriterium zur Erzielung einer sicheren Einbaulage für ein innenseitig der Torsionsfeder anliegendes Einlegeteil ist vorgesehen, dessen Außendurchmesser größer auszulegen als ein im eingebauten Zustand sich einstellender Innendurchmesser der Torsionsfeder. Für ein außenseitig der Torsionsfeder angeordnetes Einlegeteil ist dementsprechend dessen Innendurchmesser in der Einbaulage kleiner als der sich einstellende Außendurchmesser der Torsionsfeder im eingebauten Zustand.

In vorteilhafter Weise ist das aus einem geeigneten elastischen Material hergestellte Einlegeteil rohrförmig oder hülsenartig gestaltet. Eine derartige Formgebung ist kostengünstig herstellbar, erfordert keinen gerichteten, d. h. lageorientierten Einbau und vereinfacht damit die Montage.

Die Erfindung schließt weiterhin ein Einlegeteil ein, bei dem im Halbschnitt betrachtet zwei Wandungen in der Einbaulage weitestgehend parallel zueinander angeordnet ein U-förmiges Profil ergeben. Bei einem derartigen als Hohlprofil gestalteten Einlegeteil sind die Wandungen im nicht eingebauten Zustand zueinander radial gespreizt. Damit ergibt sich eine sichere Lageposition des Einlegeteils bei der die jeweilige Wandung an der Torsionsfeder bzw. an einem Wandungsbereich des Gehäuses kraftschlüssig anliegt. Den jeweiligen Einbauverhältnissen angepaßt, können die Wandungen unterschiedliche Längen aufweisen. Ein als Hohlprofil gestaltetes Einlegeteil kann außerdem mit einem oder mehreren Längsschlitzen in der vorzugsweise zur Torsionsfeder gerichteten Wandung versehen sein. Alternativ schließt die Erfindung ebenfalls umfangsverteilte, wechselseitig in der Innenwandung und der Außenwandung angeordnete Längsschlitze ein, mit der gezielt Einfluß auf die Anlagekraft der Wandung beeinflussbar ist.

Für Spannvorrichtungen, deren Gehäuse eine Lageraufnahme mit einem längenbegrenzten äußeren zylindrischen Abschnitt umfaßt, an dem sich ein konischer Übergang anschließt, bietet es sich an, das als Hohlkörper gestaltete Einlegeteil mit der kürzeren Wandung Lageraufnahmenseitig anzuordnen.

Für die Auslegung des erfindungsgemäßen Einlegeteil ist weiterhin eine axiale Länge vorgesehen, die einem Abstandsmaß zwischen zumindest drei Federwindungen entspricht. Damit kann unabhängig von der Einbaulage des Einlegeteils eine gewünschte Abstützung der Torsionsfeder in deren Mittelbereich erzielt werden.

Eine weitere Ausgestaltung der Erfindung sieht ein Einlegeteil mit einer kalottenförmigen Außenkontur vor, mit der diese über einen längenbegrenzten Abschnitt, einer Äquatorialsebene an der Torsionsfeder im eingebauten Zustand abgestützt ist.

Zu den erläuterten Ausführungsformen von Einlegeteilen schließt die Erfindung auch weitere geeignete geometrische Formen ein, die in dem von der Torsionsfeder und einem Gehäuseabschnitt radial begrenzten Zwischenraum einfügbar sind.

Die Wirksamkeit des erfindungsgemäßen Einlegeteils unterstützend ist dieses gehäuseseitig lagefixiert. Dazu bietet es sich insbesondere an, das Einlegeteil gehäuseseitig durch eine Klebung zu befestigen. Zur formschlüssigen Sicherung des Einlegeteils eignet sich weiterhin eine an der Innenwandung des Gehäuses angeordneten Ringnut, für ein die Torsionsfeder außen umschließendes Einlegeteil.

Als geeigneter Werkstoff für das Einlegeteil ist erfindungsgemäß Kunststoff, insbesondere ein PU-Schaum vorgesehen. Alternativ eignen sich Kunststoffe wie CR-Schaum, EPDM-Moosgummi. Dieses Material besitzt eine ausreichende Verschleißfestigkeit gegenüber den Bewegungen der Torsionsfeder und ermöglicht außerdem eine wirksame Dämpfung der Torsionsfeder-Schwingungen.

### Kurze Beschreibung der Zeichnungen

Anhand von mehreren Ausführungsbeispielen ist die Erfindung in vier Figuren dargestellt, die im einzelnen nachfolgend erläutert werden. Es zeigen:
- Figur 1: einen Längsschnitt durch eine erfindungsgemäße Spannvorrichtung mit einem hülsenartigen Einlegeteil, eingesetzt zwischen der Lageraufnahme und der Torsionsfeder;
- Figur 2: die Spannvorrichtung gemäß Figur 1, die zusätzlich mit einem außenseitig der Torsionsfeder angeordneten weiteren Einlegeteil versehen ist;
- Figur 3: die Spannvorrichtung mit einem als Hohlkörper gestalteten Einlegeteil;
- Figur 4: das Einlegeteil gemäß Figur 3, dessen Außenwandung einen Längsschlitz aufweist;
- Figur 5: die Spannvorrichtung gemäß Figur 1, versehen mit einem Einlegeteil, das eine kalottenähnliche Außenkontur aufweist.

### Ausführliche Beschreibung der Zeichnungen

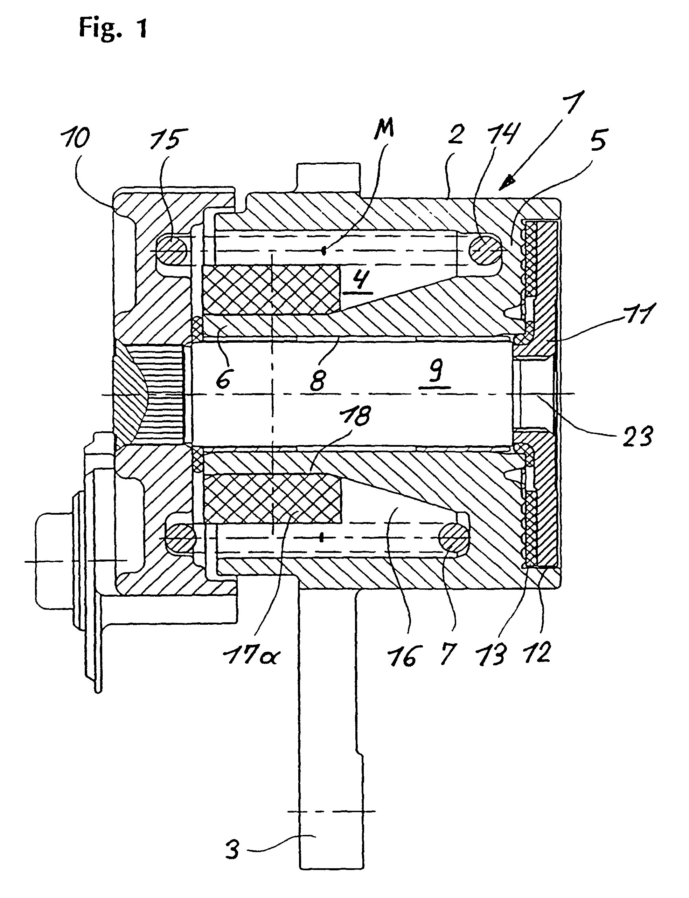

In Figur 1 ist der Aufbau einer erfindungsgemäßen Spannvorrichtung 1 im Längsschnitt dargestellt. Die Spannvorrichtung 1 umfaßt ein Gehäuse 2, das außenseitig über eine Lasche 3 beispielsweise an einer in Figur 1 nicht abgebildeten Brennkraftmaschine befestigt ist. Das Gehäuse 2 bildet eine rotationssymmetrisch um eine Lageraufnahme 6 angeordnete Ausnehmung 4, in die u. a. eine Torsionsfeder 7 geführt ist. Die Lageraufnahme 6 erstreckt sich von einem Boden 5 des Gehäuses 2 ausgehend über die gesamte Breite des Gehäuses 2. Die zentrische Bohrung 8 der Lageraufnahme 6 dient zur Aufnahme einer Achse 9, über der ein seitlich des Gehäuses 2 angeordneter Schwenkarm 10 drehbar gelagert ist. An dem vom Schwenkarm 10 gegenüberliegenden Ende ist die Achse 9 mit einer Reibscheibe 11 versehen, die bündig stirnseitig in eine der Außenkontur der Reibscheibe 11 entsprechenden Ausnehmung 12 des Gehäuses 2 eingepaßt ist. Gehäuseseitig stützt sich die Reibscheibe 11 über einen Reibbelag 13 an dem Gehäuse 2 ab. Die Torsionsfeder 7, deren Federenden 14, 15 drehfxiert im Gehäuse 2 bzw. im Schwenkarm 10 positioniert sind, ist gleichzeitig als Druckfeder ausgebildet. Diese Federgestaltung löst eine in axialer Richtung wirkende Kraftkomponente auf den Schwenkarm 10 aus, wobei sich gleichzeitig die Reibscheibe 11 über den Reibbelag 13 kraftschlüssig am Gehäuse 2 abstützt. In einen Zwischenraum 16, der radial durch die Außenkontur der Lageraufnahme 6 sowie der Torsionsfeder 7 begrenzt ist, ist ein elastisches Einlegeteil 17a angeordnet, welches den Zwischenraum 16 über eine Teillänge der Torsionsfeder 7 ausfüllt. Die Auslegung des Einlegeteils 17a sieht vor, daß deren Außendurchmesser im eingebauten Zustand den Innendurchmesser der Torsionsfeder 7 im eingebauten Zustand übertrifft. Eine derartige Auslegung sichert eine stetige Anlage des Einlegeteils 17a an der Innenkontur der Torsionsfeder 7 und unterbindet bzw. kompensiert damit eine nachteilige Eigenschwingung bzw. Resonanzschwingung der Torsionsfeder 7. Die Breite des Einlegeteils 17a gewährleistet eine Abstützung der Torsionsfeder 7 in einem Mittenbereich "M". Zur Lagefixierung des als Einlegeteil 17a gestalteten Dämpfungselementes ist dieses über eine Kontaktfläche 18 auf der Mantelfläche der Lageraufnahme 6 unlösbar, vorzugsweise durch eine Klebung, befestigt.

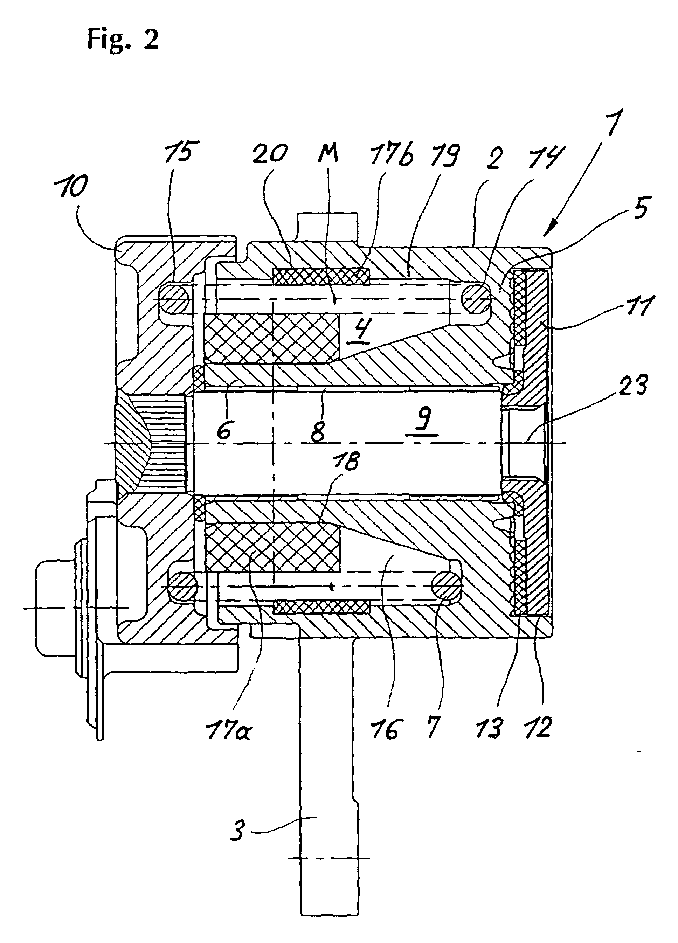

Bei den in den Figuren 2 bis 5 gezeigten weiteren Ausführungsbeispielen sind die Bauteile, die mit dem ersten Ausführungsbeispiel (Figur 1) übereinstimmen, mit gleichen Bezugsziffern versehen, so daß zur Vermeidung von Wiederholungen auf die Ausführung zum ersten Ausführungsbeispiel verwiesen werden kann. Die Beschreibungen zu den Figuren 2 bis 5 beschränken sich folglich auf die Unterschiedsteile zu Figur 1.

In Figur 2 ist die Spannvorrichtung 1 zusätzlich zu dem an der Torsionsfeder 7 innenanliegenden Einlegeteil 17a mit einem weiteren, die Torsionsfeder 7 außen umschließenden Einlegeteil 17b versehen. Das den Zwischenraum 19 teilweise ausfüllende Einlegeteil 17b ist formschlüssig in eine Ringnut 20 des Gehäuses 2 eingesetzt und damit gegenüber der Torsionsfeder 7 lagefixiert. Die Auslegung des Einlegeteils 17b sieht vor, daß im eingebauten Zustand der Außendurchmesser der Torsionsfeder 7 den Innendurchmesser des Dämpfungselementes 17b übertrifft, damit ist eine ausreichende stetige Anlage bzw. Vorspannung des Einlegeteils 17b an der Außenkontur der Torsionsfeder 7 sichergestellt.

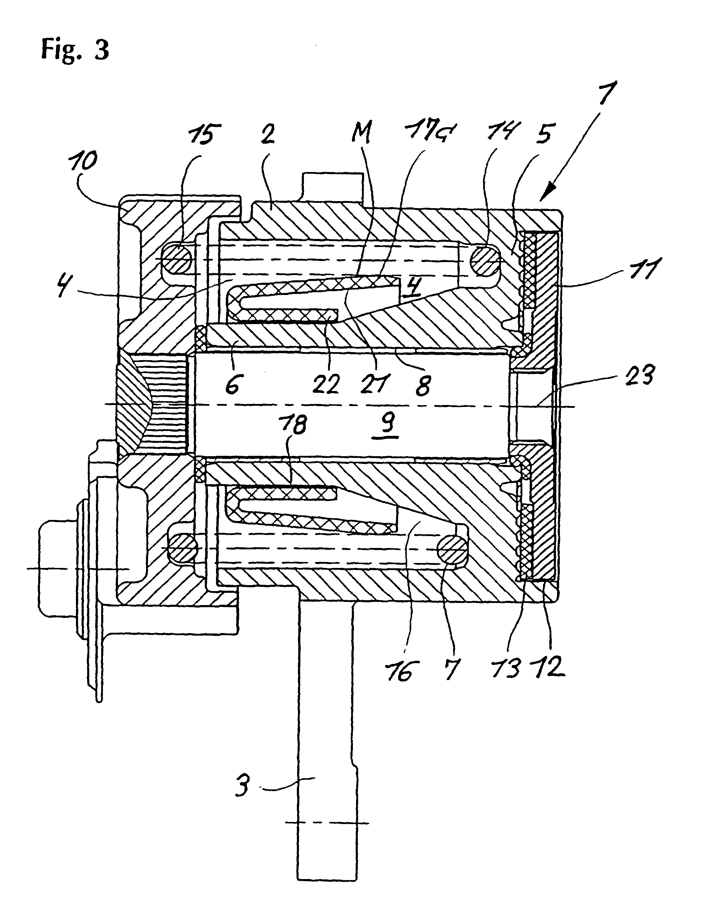

In Figur 3 ist das Einlegeteil 17c abgebildet, welches im Halbschnitt betrachtet zwei Wandungen 21, 22 aufweist, die gemeinsam einen weitestgehend U-förmigen Querschnitt bilden. Die eine größere Länge aufweisende und radial nach außen gespreizt ausgebildete Wandung 21 stützt sich in einer Endzone innenseitig an der Torsionsfeder 7 ab. Die Wandung 22 verläuft konzentrisch zu einer Längsachse 23 der Spannvorrichtung 1 und ist über die zylindrische Kontaktfläche 18 auf der Lageraufnahme 6 befestigt und vorzugsweise mittels einer Klebung lagepositioniert.

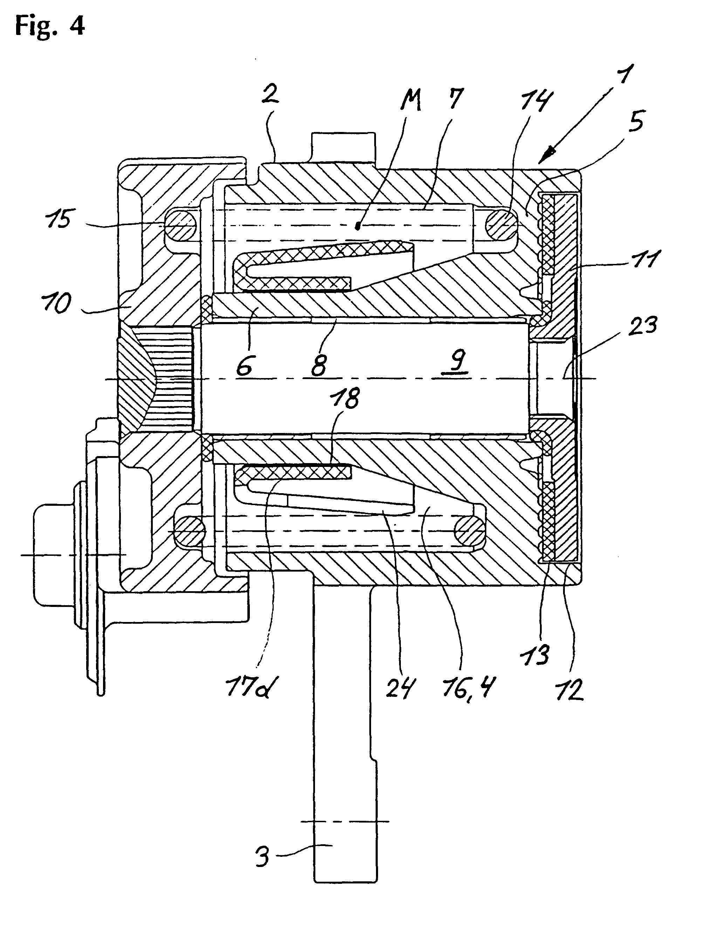

Die Figur 4 zeigt das Einlegeteil 17d. Im Unterschied zu dem in Figur 3 abgebildeten Einlegeteil 17c ist die äußere Wandung 21 des Einlegeteils 17d mit einem Längsschlitz 24 versehen. Das Dämpfungselement 17d kann beispielsweise mit mehreren, symmetrisch, umfangsverteilt angeordneten Längsschlitzen 24 versehen werden. Durch die geschlitzte Wandung 21 kann unmittelbar Einfluß auf die Vorspannung genommen werden, mit der das Einlegeteil 17d an der Innenseite der Torsionsfeder 7 abgestützt ist.

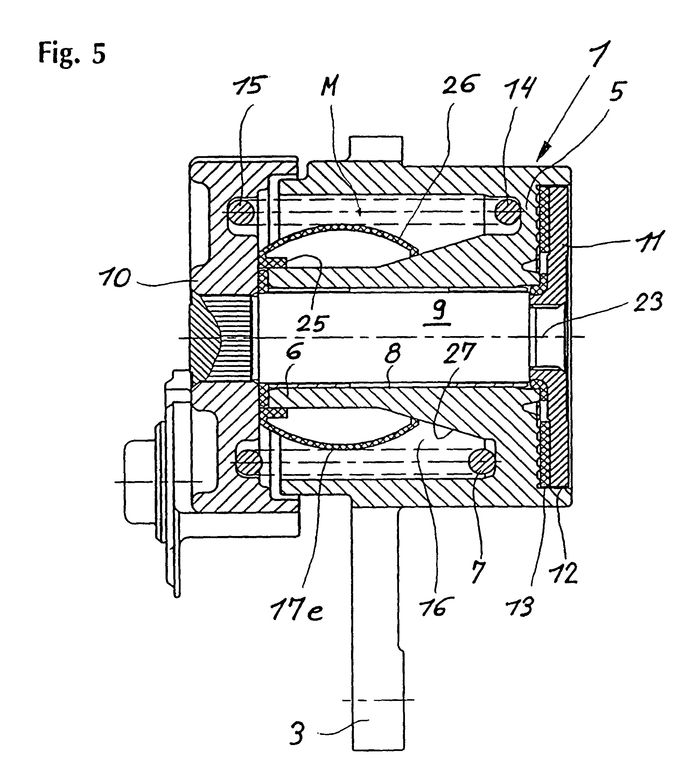

Aus der Figur 5 ist das Einlegeteil 17e mit einer kalottenartigen Außenkontur zu entnehmen. Das im Zwischenraum 16 eingesetzte und diesen teilweise ausfüllende Einlegeteil 17e ist auf der zum Schwenkarm 10 gerichteten Stirnseite mit einem nach innen gerichteten rohrförmigen Ansatz 25 versehen, über den das Einlegeteil 17e auf der Mantelfläche der Lageraufnahme 6 lagefixiert ist. An den Ansatz 25 schließt sich ein bogenförmig verlaufender Abschnitt 26 an, dessen Äquatorialsebene innenseitig an der Torsionsfeder 7 anliegt. An der vom Ansatz 25 abgewandten Seite stützt sich das Einlegeteil 17e an einem Konus 27 der Lageraufnahme 6 ab. Das Einlegeteil 17e kann kostengünstig als eine Hülse bzw. ein Rohrabschnitt gestaltet sein, mit einer Länge, die den verfügbaren Einbauraum übertrifft. Bei der Montage kommt es dann zu der außenseitigen, kalottenförmigen Wölbung.

### Bezugszahlenliste

- 1: Spannvorrichtung
- 2: Gehäuse
- 3: Lasche
- 4: Ausnehmung
- 5: Boden
- 6: Lageraufnahme
- 7: Torsionsfeder
- 8: Bohrung
- 9: Achse
- 10: Schwenkarm
- 11: Reibscheibe
- 12: Ausnehmung
- 13: Reibbelag
- 14: Federende
- 15: Federende
- 16: Zwischenraum
- 17a: Einlegeteil
- 17b: Einlegeteil
- 17c: Einlegeteil
- 17d: Einlegeteil
- 17e: Einlegeteil
- 18: Kontaktfläche
- 19: Zwischenraum
- 20: Ringnut
- 21: Wandung
- 22: Wandung
- 23: Längsachse
- 24: Längsschlitz
- 25: Ansatz
- 26: Abschnitt
- 27: Konus

## Patentansprüche

1. Spannvorrichtung (1) für einen Zugmitteltrieb, insbesondere einen Riementrieb, mit einem drehstarren Gehäuse (2), in dessen stimseitiger Ausnehmung eine Lageraufnahme (6) angeordnet ist, zur Aufnahme und Führung einer Achse (9), die mit einem seitlich des Gehäuses (2) angeordneten Schwenkarm (10) verbunden ist, wobei an dem freien Ende des Schwenkarms (10) eine an dem Zugmitteltrieb angestellte, drehbare Spannrolle angeordnet ist, und eine die Lageraufnahme (6) konzentrisch umschließende zwischen dem Gehäuse (2) und dem Schwenkarm (10) eingesetzte Torsionsfeder (7) den Schwenkarm (10) in Richtung einer Endlage beaufschlagt und dabei gleichzeitig diese Bauteile axial spreizt , wobei zur Erzielung einer gedämpften Stellbewegung, eine mit dem Schwenkarm (10) verbundene Reibscheibe (11) kraftschlüssig an dem Gehäuse (2) abgestützt ist, **dadurch gekennzeichnet, daß** zumindest ein elastisches Einlegeteil (17a bis 17e) einen von einem Abschnitt des Gehäuses (2) und der Torsionsfeder (7) radial begrenzten, kreisringartigen Zwischenraum (16, 19) über eine axiale Teillänge der Torsionsfeder (7) ausfüllt.

2. Spannvorrichtung nach Anspruch 1, **dadurch gekennzeichnet, daß** in dem radial von der Lageraufnahme (6) und der Torsionsfeder (7) begrenzten Zwischenraum (16) das Einlegeteil (17a) eingesetzt ist.

3. Spannvorrichtung nach Anspruch 1, **dadurch gekennzeichnet, daß** in dem Zwischenraum (19), der von der Torsionsfeder (7) und einer Innenwandung des Gehäuses (2) begrenzt ist, das Einlegeteil (17b) eingesetzt ist.

4. Spannvorrichtung nach Anspruch 1, **dadurch gekennzeichnet, daß** die Spannvorrichtung (1) über zwei Einlegeteile (17a, 17b) verfügt, die in den Zwischenräume (16 und 19) eingefügt sind.

5. Spannvorrichtung nach Anspruch 1, **dadurch gekennzeichnet, daß** das Einlegeteil (17a, 17c, 17d) so eingesetzt ist, dass sich eine radiale Überdeckung zwischen dem Außendurchmesser der Lageraufnahme (6) und dem Innendurchmesser des Einlegeteils (17a, 17c, 17d) einstellt.

6. Spannvorrichtung nach Anspruch 1, **dadurch gekennzeichnet, daß** ein Außendurchmesser des Einlegeteils (17a, 17c, 17d, 17e) den Innendurchmesser der Torsionsfeder (7) im eingebauten Zustand übertrifft.

7. Spannvorrichtung nach Anspruch 1, **dadurch gekennzeichnet, daß** in der Einbaulage der Innendurchmesser des Einlegeteils (17b) kleiner ist als der Außendurchmesser der Torsionsfeder (7).

8. Spannvorrichtung nach Anspruch 1, **gekennzeichnet durch** ein rohrförmig gestaltetes, in die Spannvorrichtung (1) eingesetztes Einlegeteil (17a, 17b).

9. Spannvorrichtung nach Anspruch 1, **gekennzeichnet durch** ein Einlegeteil (17c, 17d), welches im Halbschnitt betrachtet ein U-förmiges Profil aufweist, dessen Wandungen (21, 22) weitestgehend parallel zueinander angeordnet sind.

10. Spannvorrichtung nach Anspruch 9, **dadurch gekennzeichnet, daß** die Wandungen (21, 22) des Einlegeteils (17c, 17d) unterschiedliche Längen aufweisen.

11. Spannvorrichtung nach Anspruch 9, **dadurch gekennzeichnet, daß** die an der Torsionsfeder (7) anliegende Wandung (24) des Einlegeteils (17d) mit zumindest einem Längsschlitz (24) versehen ist.

12. Spannvorrichtung nach Anspruch 9, **dadurch gekennzeichnet, daß** in einer Einbaulage das Einlegeteil (17c, 17d) mit der kürzeren Wandung (22) die Mantelfläche der Lageraufnahme (6) umschließt.

13. Spannvorrichtung nach Anspruch 9, **dadurch gekennzeichnet, daß** in der Einbaulage das Einlegeteil (17c, 17d) mit der Wandung (21) in einem Mittenbereich "M" der Torsionsfeder (7) abgestützt ist.

14. Spannvorrichtung nach Anspruch 1, **gekennzeichnet durch** ein Einlegeteil (17e), welches so auf der Lageraufnahme (6) positioniert ist, das deren kalottenförmige Außenkontur mit einer Äquatorialsebene an der Innenseite der Torsionsfeder (7) abgestützt ist.

15. Spannvorrichtung nach Anspruch 1, **dadurch gekennzeichnet, daß** die axiale Länge des Einlegeteils (17a) zumindest dem Abstandsmaß von drei Windungen der Torsionsfeder (7) im eingebauten Zustand entspricht.

16. Spannvorrichtung nach Anspruch 3, **dadurch gekennzeichnet, daß** das in einer Ringnut (20) des Gehäuses (2) lagefixierte Einlegeteil (17b) die Torsionsfeder (7) außenseitig umschließt.

17. Spannvorrichtung nach Anspruch 1, **dadurch gekennzeichnet, daß** im Bereich einer Kontaktfläche (18) das Einlegeteil (17a) unlösbar, insbesondere durch eine Klebung, an der Lageraufnahme (6) lagefixiert ist.

18. Spannvorrichtung nach Anspruch 1, **dadurch gekennzeichnet, daß** als Material für das Einlegeteil (17a bis 17e) ein Kunststoff, insbesondere ein PU-Schaum, vorgesehen ist.

## Claims

1. Tensioning device (1) for a traction drive, in particular for a belt drive, which tensioning device comprises a rotationally fixed housing (2) in the end recess of which is arranged a mounting reception (6) for receiving and guiding an axle (9) that is connected to a pivoting arm (10) disposed laterally of the housing (2), a rotatable tension roller positioned against the traction drive being arranged on the free end of the pivoting arm (10), while a torsion spring (7) concentrically surrounding the mounting reception (6) and inserted between the housing (2) and the pivoting arm (10) loads the pivoting arm (10) towards an end position and simultaneously spreads these components axially, and, for achieving a damped adjusting movement, a friction disk (11) connected to the pivoting arm (10) is supported by adherence on the housing (2), **characterised in that** at least one elastic insert (17a to 17e) fills, over an axial sub-length of the torsion spring (7), an intermediate annular space (16, 19) that is delimited radially by a portion of the housing (2) and the torsion spring (7).

2. Tensioning device according to claim 1, **characterised in that** the insert (17a) is inserted into the intermediate space (16) that is delimited radially by the mounting reception (6) and the torsion spring (7).

3. Tensioning device according to claim 1, **characterised in that** the insert (17b) is inserted into the intermediate space (19) that is delimited by the torsion spring (7) and the inner wall of the housing (2).

4. Tensioning device according to claim 1, **characterised in that** the tensioning device (1) comprises two inserts (17a, 17b) that are inserted into the intermediate spaces (16 and 19).

5. Tensioning device according to claim 1, **characterised in that** the inserts (17a, 17c, 17d) are inserted in such a way that a radial overlap is formed between the outer diameter of the mounting reception (6) and the inner diameter of the insert (17a, 17b, 17c).

6. Tensioning device according to claim 1, **characterised in that** an outer diameter of the insert (17a, 17c, 17d, 17e) is larger than the inner diameter of the torsion spring (7) in the installed state.

7. Tensioning device according to claim 1, **characterised in that,** in the installed position, the inner diameter of the insert (17b) is smaller than the outer diameter of the torsion spring (7).

8. Tensioning device according to claim 1, **characterised by** an insert (17a, 17b) of tube-shaped configuration inserted into the tensioning device (1).

9. Tensioning device according to claim 1, **characterised by** an insert (17c, 17d) which, as viewed in a semi-section, has a U-shaped profile, the walls (21, 22) of which are arranged substantially parallel to each other.

10. Tensioning device according to claim 9, **characterised in that** the walls (21, 22) of the insert (17c, 17d) have different lengths.

11. Tensioning device according to claim 9, **characterised in that** the wall (24) of the insert (17d) that bears against the torsion spring (7) comprises at least one longitudinal slot (24).

12. Tensioning device according to claim 9, **characterised in that,** in an installed position, the insert (17c, 17d) surrounds, with the shorter wall (22), the outer peripheral surface of the mounting reception (6).

13. Tensioning device according to claim 9, **characterised in that,** in the installed position, the insert (17c, 17d) is supported through the wall (21) in a central region "M" of the torsion spring (7).

14. Tensioning device according to claim 1, **characterised by** an insert (17e) that is positioned on the mounting reception (6) in such a way that its cup-shaped outer contour is supported through an equatorial plane on the inside of the torsion spring (7).

15. Tensioning device according to claim 1, **characterised in that** the axial length of the insert (17a) corresponds at least to the spaced dimension of three turns of the torsion spring (7) in the installed state.

16. Tensioning device according to claim 3, **characterised in that** the insert (17b) that is positionally fixed in an annular groove (20) of the housing (2) surrounds the torsion spring (7) on the outside.

17. Tensioning device according to claim 1, **characterised in that,** in the region of a contact surface (18), the insert (17a) is inseparably fixed, in particular by gluing, on the mounting reception (6).

18. Tensioning device according to claim 1, **characterised in that** the insert (17a to 17e) is made of a plastic material, in particular, of a PU foam.

## Revendications

1. Dispositif de tension (1) pour une commande par entraînement, plus particulièrement, une commande à courroie, ledit dispositif comprenant un boîtier (2), fixe en rotation, dans l'évidement frontal duquel est agencée une réception de montage (6) pour recevoir et guider un essieu (9) qui est relié à un bras pivotant (10) disposé au côté du boîtier (2), un galet-tendeur rotatif positionné contre la commande par entraînement étant agencé sur l'extrémité libre du bras pivotant (10) pendant qu'un ressort de torsion (7) qui entoure concentriquement la réception de montage (6) est inséré entre le boîtier (2) et le bras pivotant (10) et précontraint le bras pivotant (10) vers une position extrême en écartant, en même temps, ces composants axialement l'un de l'autre, et, pour obtenir un mouvement amorti de réglage, une plaque de friction (11), qui est reliée au bras pivotant (10), est supportée par adhérence sur le boîtier (2), **caractérisé en ce que,** au moins une pièce élastique d'insertion (17a à 17e) remplit, sur une sous-longueur axiale du ressort de torsion (7), un espace intermédiaire annulaire (16, 19) qui est délimité radialement par une portion du boîtier (2) et par le ressort de torsion (7).

2. Dispositif de tension selon la revendication 1, **caractérisé en ce que** la pièce d'insertion (17a) est insérée dans l'espace intermédiaire (16) qui est délimité radialement par la réception de montage (6) et par le ressort de torsion (7).

3. Dispositif de tension selon la revendication 1, **caractérisé en ce que** la pièce d'insertion (17b) est insérée dans l'espace intermédiaire (19) qui est délimité par le ressort de torsion (7) et par une paroi intérieure du boîtier (2).

4. Dispositif de tension selon la revendication 1, **caractérisé en ce que** le dispositif de tension (1) comprend deux pièces d'insertion (17a, 17b) qui sont insérées dans les espaces intermédiaires (16 et 19).

5. Dispositif de tension selon la revendication 1, **caractérisé en ce que** la pièce d'insertion (17a, 17c, 17d) est insérée de telle façon qu'il se produit un recouvrement radial entre le diamètre extérieur de la réception de montage (6) et le diamètre intérieur de la pièce d'insertion (17a, 17c, 17d).

6. Dispositif de tension selon la revendication 1, **caractérisé en ce qu'**un diamètre extérieur de la pièce d'insertion (17a, 17c, 17d, 17e) est supérieur au diamètre intérieur du ressort de torsion (7).

7. Dispositif de tension selon la revendication 1, **caractérisé en ce que,** dans la position de montage, le diamètre intérieur de la pièce d'insertion (17b) est inférieur au diamètre extérieur du ressort de torsion (7).

8. Dispositif de tension selon la revendication 1, **caractérisé par** une pièce d'insertion (17a, 17b) de forme tubulaire insérée dans le dispositif de tension (1).

9. Dispositif de tension selon la revendication 1, **caractérisé par** une pièce d'insertion (17c, 17d), qui, en regardant en demi-coupe, a un profil en forme de U dont les parois (21, 22) sont agencées globalement parallèles l'une à l'autre.

10. Dispositif de tension selon la revendication 9, **caractérisé en ce que** les parois (21, 22) de la pièce d'insertion (17c, 17d) ont des longueurs différentes.

11. Dispositif de tension selon la revendication 9, **caractérisé en ce que** la paroi (24) de la pièce d'insertion (17d) qui s'appuie contre le ressort de torsion (7) comprend au moins une fente longitudinale (24).

12. Dispositif de tension selon la revendication 9, **caractérisé en ce que,** dans une position de montage, la pièce d'insertion (17c, 17d) entoure la surface périphérique externe de la réception de montage (6) par la paroi plus courte (22).

13. Dispositif de tension selon la revendication 9, **caractérisé en ce que,** dans la position de montage, la pièce d'insertion (17c, 17d) est supportée par la paroi (21) dans une région médiane "M" du ressort de torsion (7).

14. Dispositif de tension selon la revendication 1, **caractérisé par une** pièce d'insertion (17e) qui est positionnée de telle façon sur la réception de montage (6) que son contour externe en forme de cuvette est supporté par un plan équatorial sur le côté intérieur du ressort de torsion (7).

15. Dispositif de tension selon la revendication 1, **caractérisé en ce que** la longueur axiale de la pièce d'insertion (17a) correspond au moins à l'étendue de l'écartement de trois spires du ressort de torsion (7) à l'état de montage.

16. Dispositif de tension selon la revendication 3, **caractérisé en ce que** la pièce d'insertion (17b) qui est fixée dans une rainure annulaire (20) du boîtier (2) entoure le ressort de torsion (7) du côté extérieur.

17. Dispositif de tension selon la revendication 1, **caractérisé en ce que,** dans la région d'une surface de contact (18), la pièce d'insertion (17a) est fixée de manière inséparable, plus particulièrement, par collage, sur la réception de montage (6).

18. Dispositif de tension selon la revendication 1, **caractérisé en ce que** la pièce d'insertion (17a à 17e) est faite en une matière plastique, plus particulièrement, en une mousse PU.
